# EUROPÄISCHE PATENTSCHRIFT

(11) **EP 1 211 007 B1**
(45) Veröffentlichungstag und Bekanntmachung des Hinweises auf die Patenterteilung: **04.05.2005**
(21) Anmeldenummer: 01811127.8
(22) Anmeldetag: 23.11.2001
(51) Int. Cl.: B23D 19/08, B23D 31/00

(54) **Vorrichtung zur Dünnblech-Bearbeitung**
Apparatus for machining thin metal sheets
Dispositif d'usinage de tôles minces

(30) Priorität: 04.12.2000 CH 23502000
(43) Veröffentlichungstag der Anmeldung: 05.06.2002
(73) Patentinhaber: MABI AG, 5106 Veltheim (CH)
(72) Erfinder: Biland, Max, 5106 Veltheim (CH)
(74) Vertreter: Groner, Manfred

(56) Entgegenhaltungen:
- EP-A- 0 292 712
- EP-A- 0 593 964
- EP-A- 0 620 072
- EP-A- 0 972 600
- CH-A- 689 689
- DE-A- 3 120 331
- DE-A- 4 114 828
- DE-A- 4 117 723
- DE-U- 9 209 160
- US-A- 4 583 719
- US-A- 5 379 510

## Beschreibung

Die Erfindung betrifft eine Vorrichtung zur Dünnblech-Bearbeitung, insbesondere zum Formschneiden von Dünnblechen, mit einem horizontal auf einem Schlitten verfahrbaren Schneidwerkzeug, einer steuerbaren Blechtransporteinrichtung sowie einem weiteren Werkzeug zur Dünnblech-Bearbeitung.

Eine derartige Vorrichtung ist aus der CH 689 689 A bekannt, die als nächstliegender Stand der Technik betrachtet wird.

Vorrichtungen zur Dünnblech-Bearbeitung sind bekannt und werden insbesondere für die Herstellung von Isolierverschalungen, beispielsweise für Dampfleitungen benötigt. Die für solche Verschalungen benötigten Formstücke sind in der Regel streifenförmig und vielfach an einem Rand mit Schraubenlöchern versehen. Bei der Vorrichtung nach der CH 689 689 des Anmelders ist ausser einem Schneidwerkzeug mit einem Werkzeugober- und -unterteil auch ein Feinstanzwerkzeug mit einem Oberteil und einem Unterteil vorgesehen. Zum Herstellen der Schraubenlöcher wird das Blech mit dem Stanzwerkzeug von oben bearbeitet. Die US-5,379,510 offenbart eine Vorrichtung zur Bearbeitung von Holz. Dazu sind an einem Querbalken über der Bearbeitungsebene und unter der Bearbeitungsebene Werkzeuge und insbesondere Fräs- und Bohrwerkzeuge angeordnet.

Der Erfindung liegt die Aufgabe zugrunde, eine Vorrichtung der genannten Art zu schaffen, die eine einfachere Dünnblech-Bearbeitung ermöglicht.

Die Aufgabe ist bei einer gattungsgemässen Vorrichtung gemäss Anspruch 1 gelöst. Die erfindungsgemässe Vorrichtung hat den besonderen Vorteil, dass der Raum über dem zu bearbeitenden Dünnblech frei ist. Der Transport und die Handhabung des Dünnbleches ist bei der erfindungsgemässen Vorrichtung wesentlich einfacher, da der Raum über dem zu bearbeitenden Dünnblech frei ist. Ist gemäss einer Weiterbildung der Erfindung das weitere Werkzeug auf dem genannten Schlitten angeordnet, so ergibt sich dadurch eine besonders einfache und kostengünstige Vorrichtung, da eine separate Schiene für das weitere Werkzeug nicht erforderlich ist. Das weitere Werkzeug ist vorzugsweise eine Bohrmaschine, die im Abstand zum Schneidwerkzeug auf dem Schlitten befestigt ist. Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: schematisch eine räumliche Ansicht einer erfindungsgemässen Vorrichtung,
- Fig. 2: schematisch eine Ansicht eines Formstückes,
- Fig. 3: eine weitere Ansicht einer erfindungsgemässen Vorrichtung, wobei aus zeichnerischen Gründen Teile weggelassen sind und
- Fig. 4: eine Draufsicht auf einen Schlitten.

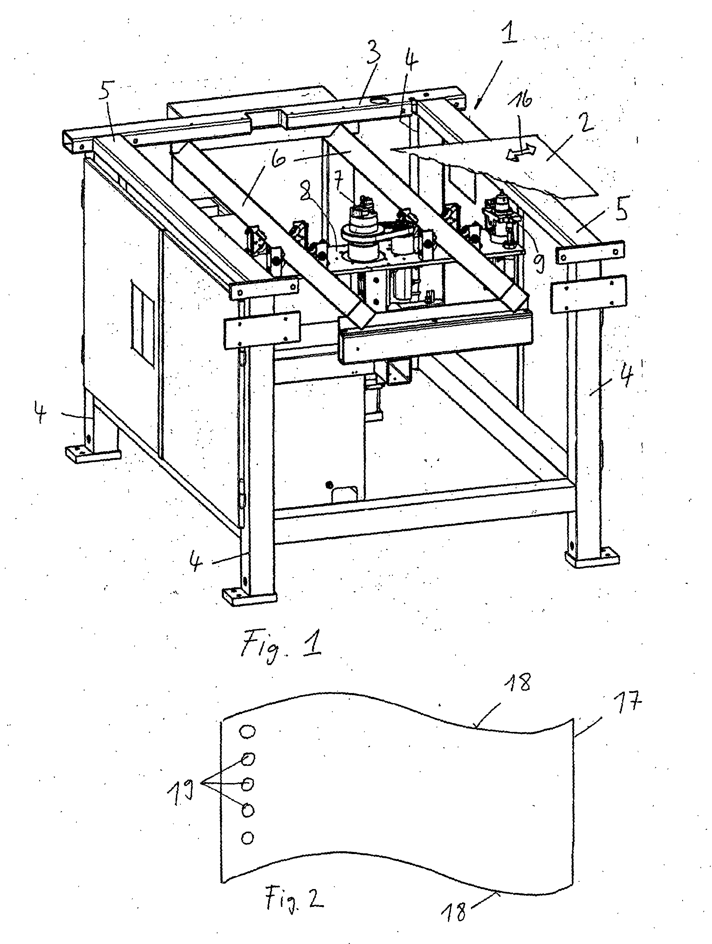

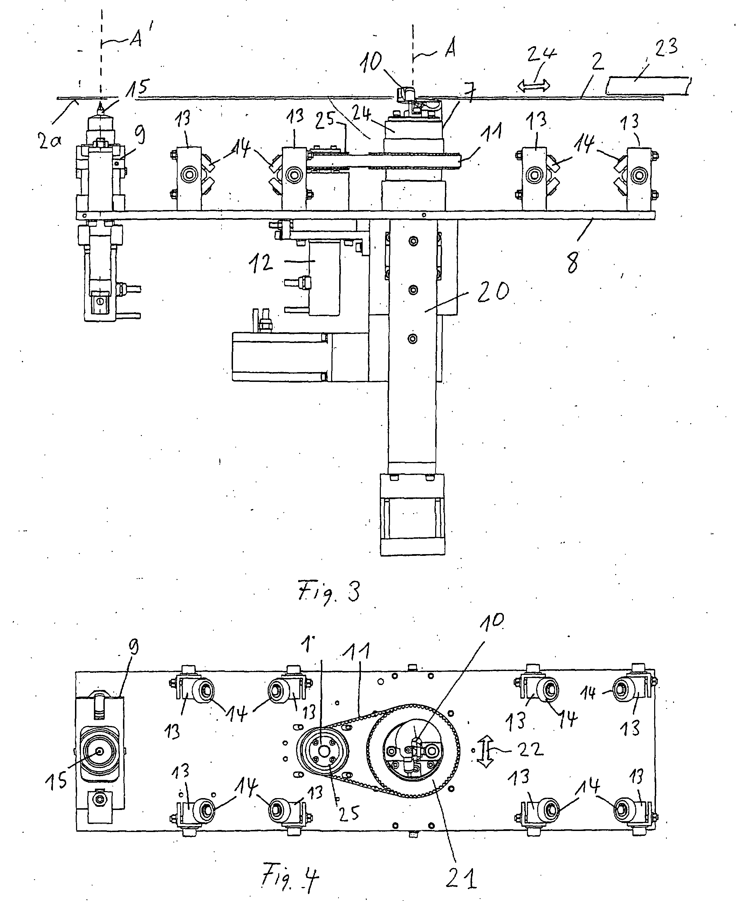

Die Fig. 1 zeigt eine erfindungsgemässe Vorrichtung 1, bei welcher die in Fig. 3 angedeutete Blechtransporteinrichtung 23 weggelassen ist. Solche Blechtransporteinrichtungen 23 sind allgemein bekannt. Mit einer solchen Einrichtung 23 wird in Fig. 1 das hier lediglich angedeutete Dünnblech 2 in den Richtungen des Doppelpfeils 16 verschoben. Das Blech 2 liegt hierbei auf horizontalen Trägern 5 auf. Diese Träger 5 sind Teile eines Maschinengestelles 3, das vier Stützen 4 aufweist. Am Gestell 3 sind zwei horizontale und im Abstand zueinander angeordnete Schienen 6 befestigt, die parallel zueinander verlaufen und an denen ein Schlitten 8 verfahrbar gelagert ist. Zur Lagerung des Schlittens 8 an den Schienen 6 sind auf dem Schlitten 8 mehrere Träger 13 befestigt, an denen jeweils zwei Rollen 14 gelagert sind. Diese Rollen 14 laufen auf den im Querschnitt viereckigen Schienen 6. Mit einem hier nicht gezeigten Antrieb kann der Schlitten 8 in den Richtungen der beiden Schienen 6 gesteuert verfahren werden.

Auf dem Schlitten 8 ist eine Schneidvorrichtung 7 angeordnet, die an einem oberen Ende ein Schneidwerkzeug 10 aufweist, das im wesentlichen eine Blechschere ist und von einem Antrieb 20 angetrieben wird. Das Schneidwerkzeug 10 kann um eine vertikale Achse A gedreht werden. Hierzu ist ein Zahnriemen 11 vorgesehen, der um ein Zahnrad 21 eines Schneidkopfes 24 sowie um ein Rad 25 eines Drehantriebes 12 gelegt ist. Mit der Schneidvorrichtung 7 kann aus dem Dünnblech 2 beispielsweise das in Fig. 2 gezeigte Formstück 17 herausgeschnitten werden. Die durch die Schneidvorrichtung 7 gebildeten Schnittkanten sind hier mit 18 bezeichnet. Durch entsprechende Steuerung mittels einer hier nicht gezeigten Steuervorrichtung können selbstverständlich auch andere Formstücke aus dem Blech 2 herausgeschnitten werden.

Auf dem Schlitten 8 ist im Abstand zur Schneidvorrichtung 7 ein weiteres Werkzeug 9 angeordnet, das insbesondere eine Bohrmaschine ist. Das Werkzeug 9 weist einen Bohrer 15 auf, der um eine vertikale Achse A' angetrieben ist und mit dem das Blech 2 von unten, d.h. gegen die Unterseite 2a bearbeitbar ist. Mit diesem Werkzeug 9 können die in Fig. 2 gezeigten Schraubenlöcher 19 oder auch andere Durchbrüche hergestellt werden. Die Schneidvorrichtung 7 als auch das weitere Werkzeug 9 sind jeweils unabhängig voneinander vertikal verstellbar. Beim Schneiden des Bleches 2 ist das weitere Werkzeug 9 in einer unteren inaktiven Position, wie in Fig. 3 gezeigt. Beim Bohren der Schraubenlöcher 19 ist hingegen die Schneidvorrichtung 7 versenkt, während das weitere Werkzeug 9 angehoben ist. Die vertikale Verstellung der Schneidvorrichtung 7 sowie des weiteren Werkzeuges 9 können mit an sich bekannten Antrieben erfolgen. Solche Verstellantriebe sind dem Fachmann bekannt.

## Patentansprüche

1. Vorrichtung zur Dünnblech-Bearbeitung, insbesondere zum Formschneiden von Dünnblechen (2) mit einem horizontal auf einem Schlitten (8) verfahrbaren Schneidvorrichtung (7), einer steuerbaren Blechtransporteinrichtung (23) sowie einem weiteren Werkzeug (9) zur Dünnblech-Bearbeitung, **dadurch gekennzeichnet, dass** das weitere Werkzeug (9) so angeordnet ist, dass das Dünnblech (2) zur Herstellung von Durchbrüchen (19) von unten bearbeitbar ist, dass ein Schneidwerkzeug (10) um eine vertikale Achse (A) drehbar ist und das weitere Werkzeug (9) sowie das Schneidvorrichtung (7) unabhängig voneinander vertikal verstellbar sind, dass die Schneidvorrichtung (7) an einem oberen Ende das scherenartige Schneidwerkzeug (10) aufweist, dass das weitere Werkzeug (9) und die Schneidvorrichtung (7) so angeordnet sind, dass beim Schneiden des Dünnbleches (2) das weitere Werkzeug (9) in einer unteren inaktiven Position sein kann, und dass hingegen beim Bohren von Durchbrüchen (19) die Schneidvorrichtung (7) versenkbar ist, während das weitere Werkzeug (9) angehoben ist.

2. Vorrichtung nach Anspruch 1, **dadurch gekennzeichnet, dass** das weitere Werkzeug (9) auf dem genannten Schlitten (8) befestigt ist.

3. Vorrichtung nach Anspruch 1, **dadurch gekennzeichnet, dass** das weitere Werkzeug (9) eine Bohrmaschine ist.

4. Vorrichtung nach einem der Ansprüche 1 bis 3, **dadurch gekennzeichnet, dass** der Schlitten (8) an zwei horizontalen Führungsschienen (6) gelagert ist und dass die Schneidvorrichtung (7) zwischen diesen Führungsschienen (6) und das weitere Werkzeug (9) neben diesen Führungsschienen (6) angeordnet ist.

## Claims

1. Apparatus for machining thin metal sheets, in particular for cutting thin metal sheets (2) to shape, having a cutting device (7) horizontally traversable on a slide (8), a controllable sheet-transport device (23), and a further tool (9) for machining thin metal sheets, **characterized in that** the further tool (9) is arranged in such a way that the thin metal sheet (2) can be machined from below for producing apertures (19), **in that** a cutting tool (10) is rotatable about a vertical axis (A) and the further tool (9) and the cutting device (7) are vertically adjustable independently of one another, **in that** the cutting device (7) has the cutting tool (10) at the top end, this cutting tool (10) being like a pair of shears, **in that** the further tool (9) and the cutting device (7) are arranged in such a way that, during the cutting of the thin metal sheet (2), the further tool (9) can be in a bottom inactive position, and **in that**, on the other hand, during the manufacturing of apertures (19), the cutting device (7) can be lowered, whereas the further tool (9) is raised.

2. Apparatus according to Claim 1, **characterized in that** the further tool (9) is fastened to the said slide (8).

3. Apparatus according to Claim 1, **characterized in that** the further tool (9) is a drilling machine.

4. Apparatus according to one of Claims 1 to 3, **characterized in that** the slide (8) is mounted on two horizontal guide rails (6), and **in that** the cutting device (7) is arranged between these guide rails (6) and the further tool (9) is arranged next to these guide rails (6).

## Revendications

1. Dispositif d'usinage de tôles minces, en particulier de détourage de tôles minces (2), qui présente un dispositif de découpe (7) qui peut être déplacé horizontalement sur un chariot (8), un dispositif asservi (23) de transport des tôles et un outil supplémentaire (9) destiné à l'usinage des tôles minces, **caractérisé en ce que** l'outil supplémentaire (9) est agencé de telle façon que la tôle mince (2) puisse être usinée par le dessous pour y ménager des perforations (19), **en ce qu'**un outil de découpe (10) peut tourner autour d'un axe vertical (A) et l'outil supplémentaire (9) et le dispositif de découpe (7) peuvent indépendamment l'un de l'autre être déplacés verticalement, **en ce que** le dispositif de découpe (7) présente l'outil de découpe (10) de type cisaille sur son extrémité supérieure et **en ce que** l'outil supplémentaire (9) et le dispositif de découpe (7) sont agencés de telle manière que, lors de la découpe de la tôle mince (2), l'outil supplémentaire (9) peut être situé en une position inférieure inactive tandis qu'en revanche, lors du fabrication de perforations (19), le dispositif de découpe (7) peut être abaissé alors que l'outil supplémentaire (9) est levé.

2. Dispositif selon la revendication 1, **caractérisé en ce que** l'outil supplémentaire (9) est fixé sur ledit chariot (8).

3. Dispositif selon la revendication 1, **caractérisé en ce que** l'outil supplémentaire (9) est une foreuse.

4. Dispositif selon l'un des revendications 1 à 3, **caractérisé en ce que** le chariot (8) est monté sur deux rails de guidage horizontaux (6) et **en ce que** le dispositif de découpe (7) est agencé entre ces rails de guidage (6), tandis que l'outil supplémentaire (9) est agencé à côté ces rails de guidage (6).
